# EUROPÄISCHE PATENTSCHRIFT

(11) **EP 1 253 731 B1**
(45) Veröffentlichungstag und Bekanntmachung des Hinweises auf die Patenterteilung: **26.10.2005**
(21) Anmeldenummer: 02007763.2
(22) Anmeldetag: 05.04.2002
(51) Int. Cl.: H04B 10/17, H04B 10/18, H04J 14/02

(54) **Verfahren und Übertragungssystem zur Optimierung der Übertragungseigenschaften eines optischen Wellenlängen-Multiplex-Systems**
Method and transmission system to optimise the transmission characteristics of an optical wavelength division multiplex system
Procédé et Système de transmission pour l'optimisation des characteristiques de transmission d'un système optique à multiplexage en longeur d'onde

(30) Priorität: 25.04.2001 DE 10120276
(43) Veröffentlichungstag der Anmeldung: 30.10.2002
(73) Patentinhaber: SIEMENS AKTIENGESELLSCHAFT, 80333 München (DE)
(72) Erfinder: Neuhauser, Richard, Dr., 85375 Neufahrn (DE)

(56) Entgegenhaltungen:
- WO-A-00/49721
- US-A- 4 616 898
- MATSUDA T ET AL: "Experiments on long-haul broadband WDM transmission with Raman amplification" ELECTRONICS LETTERS, IEE STEVENAGE, GB, Bd. 37, Nr. 4, 15. Februar 2001 (2001-02-15), Seiten 237-239, XP006016299 ISSN: 0013-5194
- SU Y ET AL: "All-optical limiter using gain flattened fibre parametric amplifier" ELECTRONICS LETTERS, IEE STEVENAGE, GB, Bd. 36, Nr. 13, 22. Juni 2000 (2000-06-22), Seiten 1103-1105, XP006015358 ISSN: 0013-5194
- KOCH F ET AL: "Characterisation of single stage, dual-pumped Raman fibre amplifiers for different gain fibre lengths" ELECTRONICS LETTERS, IEE STEVENAGE, GB, Bd. 36, Nr. 4, 17. Februar 2000 (2000-02-17), Seiten 347-348, XP006014841 ISSN: 0013-5194

## Beschreibung

Die Erfindung betrifft ein Verfahren und ein Übertragungssystem nach den Oberbegriffen der Patentansprüche 1 und 5.

Die Übertragungskapazität optischer Übertragungssyteme läßt sich durch das Multiplexen von mehrere unterschiedliche Wellenlängen aufweisenden Kanälen eines optischen Wellenlängen-Multiplex(-WDM)-Signals steigern. Durch die Wellenlängenabhängigkeit optischer Komponenten bzw. Effekte weisen die Kanäle am Ende der Übertragungsstrecke unterschiedliche Pegel, Signal-Rauschabstände und/oder Signalverzerrungen, z. B. in Form von Nichtlinearitäten, auf. Idealerweise müssen die Kanäle nach einer oder mehreren Verstärkungen entlang der Übertragungsstrecke ein flaches Gewinnspektrum aufweisen. Zur Erzielung des flachen Gewinnspektrums wurde als Beispiel in der Patentanmeldung DE 10057659.1 ein Übertragungssystem mit mehreren kaskadierten Raman-Verstärkern vorgeschlagen.

Bei üblichen WDM-Übertragungssystemen werden am Anfang der Übertragungsstrecke mittels variabler Dämpfungsglieder für alle Kanäle gleiche Kanalpegel eingestellt. Durch die Wellenlängenabhängigkeit der optischen Komponenten können aber Kanalpegeldifferenzen entlang der Strecke nahezu stetig zunehmen.

Die EP 1 182 808 A2 betrifft einen Raman-Verstärker mit mehreren Pumpquellen zur Verstärkung eines mehrere Kanäle aufweisenden WDM-Signals, bei dem eine Regelung zur Einebnung der Kanalpegel am Ausgang des Raman-Verstärkers durch eine entsprechende Verstellung der Pumpströme der Pumpquellen vorgesehen ist. Dabei wird die durch einen Demultiplexer und einen optisch-elektrischen Wandler pro Kanal gemessene Leistung als Regelkriterium verwendet. Weist die Übertragungsstrecke vor dem Raman-Verstärker auftretenden Signalverzerrungen, insbesondere durch nicht lineare Effekte, ist dieses Regelkriterium jedoch nicht geeignet.

Aus EP 1 018 666 A1 ist ebenfalls eine Regelung der Pumpquellenströme eines bzw. zweier kaskadierter Raman-Verstärker auf der Grundlage einer Leistungsmessung der Ausgangspegel als Regelkriterium bekannt.

Eine bessere Ausnutzung der Systemenressourcen wird durch den Einsatz einer Preemphase der Kanalpegel am Anfang der Übertragungsstrecke erreicht. Die Verteilung der Kanalpegel wird am Streckenanfang so gewählt, daß alle Kanäle am Ende der Strecke gleiche Signal-Rauschabstände OSNR aufweisen. Bei kleinen Signalverzerrungen oder sogenannten rauschbegrenzten Systemen eignet sich diese OSNR-Preemphase mit Signal-Rauschabstand-Regelung gut.

Aus der Literaturstelle "All-optical limiter using gain flattened fibre parametric amplifier", Su. and al., Electronics Letters, 22^{nd} June 2000, Vol. 36, No. 13, wird z. B. mittels eines Sättigungsverstärkers eine Methode zur Kompensation von Signalschwankungen beschrieben.

Aus WO 00/49721 ist ein optisches Übertragungssystem mit mehrere Pumpquellen aufweisenden kaskadierten EDFAs bzw. Raman-Verstärkern zur Verstärkung eines mehrere Kanäle aufweisenden übertragenen WDM-Signals bekannt, bei dem eine Meßeinrichtung der Leistung oder der Bitfehlerrate der übertragenen Signale am Ende der Übertragungsstrecke sowie eine Regelung zur Erzielung eines "profile/system"-Performance am Ende der Übertragungsstrecke durch eine entsprechende Verstellung der Leistung der Pumpquellen eines Raman-Verstärkers und durch Einstellung eines ferngesteuerten Signalverstellers ("signal varying remote device 12") vorgesehen sind. Als Regeloptimum wird hier ein möglichst flaches Gewinn-Spektrum des Signals am Ausgang des optischen Übertragungssystems erzielt. Dadurch werden Signalverzerrungen jedoch nicht korrekt berücksichtigt.

In der Literaturstelle "Experiment on long-haul broadband WDM transmission with Raman amplification", Matsuda and al., Electronics Letters, 15^{th} February 2001, Vol. 37, No. 4 werden Signal-Rauschabstände OSNR sowie ein Q-Faktor für unterschiedliche Signale in Kanälen eines übertragenen WDM-Signals gemessen. Diese Messung dient zum experimentellen Performance-Vergleich zwischen zwei möglichen Verstärkungsmitteln - EDFA oder Raman-Verstärker -, die längs der Übertragungsstrecke verwendet werden.

Eine weitere verbesserte Methode ist die in der Patentanmeldung DE 10047342.3 vorgesschlagene Q-Preemphase, bei der die Pegelverteilung der Kanäle am Anfang der Übertragungsstrecke so gewählt wird, daß die Kanäle am Ende der Übertragungsstrecke die gleichen Werte des Q-Faktors (s. "Optical Fiber Telecommunications", IIIA, I.P. Kaminow, T.L. Koch, p. 316, 1997, ISBN 0-12-395170-4) aufweisen. Die Kanäle mit schlechtem Q-Faktor werden am Anfang der Übertragungsstrecke angehoben, um die schlechtere Signalqualität durch verbesserte Signal-Rauschabstände OSNR am Streckenende auszugleichen. Da der Q-Faktor ein direktes Maß für die Signalqualität darstellt, hat die Q-Preemphase gegenüber der vorher zittierten OSNR-Preemphase den Vorteil, daß neben dem OSNR-Ausgleich eine Vielzahl von zusätzlichen limitierenden Effekten wie z. B. nicht lineare Signalverzerrungen, unterschiedliche Dispersionskompensation zwischen den Kanälen, unterschiedliche Sender- oder Empfängercharakteristika bzw. Übersprechen durch Mehrfachreflexionen berücksichtigt wird.
Neben dem Q-Faktor als Maß für die Signalqualität können auch äquivalente Qualitätsparameter wie z. B. die Bitfehlerrate BER oder die Anzahl der korrigierten Bits in Systemen mit Forward Error Correction (FEC) verwendet werden.

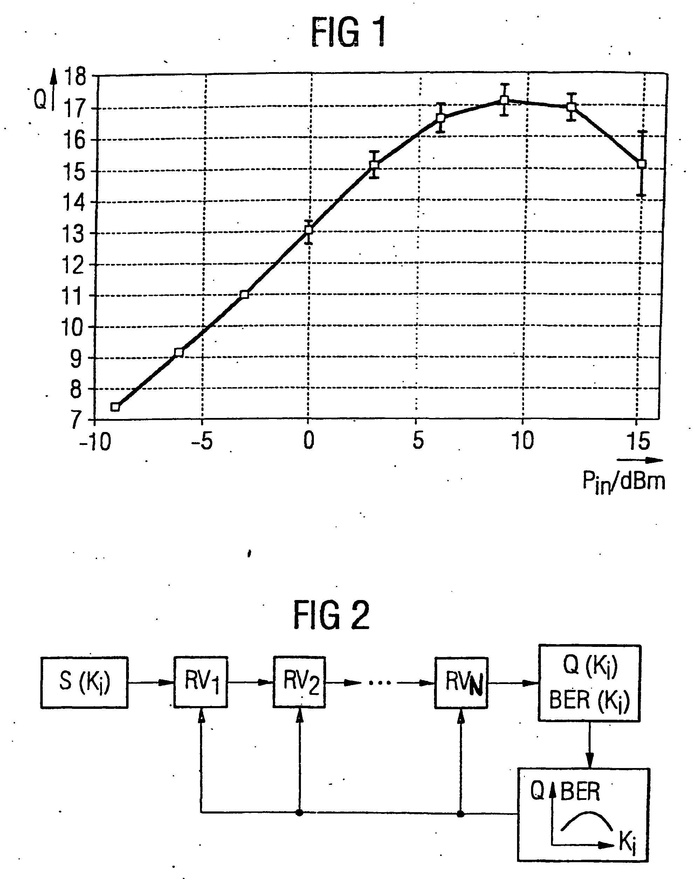

Bei Systemen mit hohen Kanalpegeln am Anfang der Übertragungsstrecke treten durch eine OSNR- oder Q-Preemphase hohe Signalverzerrungen durch nichtlineare Effekte wie z. B. Four Wave Mixing, Self Phase Modulation, Cross Phase Modulation, Stimulated Raman Scattering (siehe "Fiber-Optic Communication Systems", G.P. Agrawal, 2^{nd} Edition, pp. 323-328) auf. Diese nichtlinearen Verzerrungen werden durch eine gleichzeitige Verbesserung der Rausch-Signalabstände OSNR bei Erhöhung einzelner Kanalpegel nicht kompensiert. In **Figur 1** wird der Q-Faktor bei optimaler Dispersion eines Übertragungssystems mit acht Kanälen (100 GHz Kanalabstand, 10 Gb/s Datenrate und NRZ Codierung) als Funktion der Eingängsleistung Pᵢₙ der Kanäle dargestellt. Die Kanalqualität Q steigt mit zunehmender Eingangsleistung Pᵢₙ zunächst linear an, gerät aber in Sättigung mit zunehmendem Einfluß der nichtlinearen Effekte bei hohen Eingangsleistungen und fällt weiterhin für noch höhere Leistungen wieder ab.

Die Aufgabe der vorliegenden Erfindung besteht also darin, eine Verbesserung der Übertragungsqualität für ein Wellenlängen-Multiplex-System mit breitbandigen kaskadierten Raman-Verstärkern, insbesondere bei hohen nichtlinearen Signalverzerrungen, zu gewährleisten.

Erfindungsgemäß wird diese Aufgabe durch ein Verfahren und ein Übertragungssystem gelöst, die durch die Merkmale der Ansprüche 1 und 5 gekennzeichnet sind.

Zweckmäßige Weiterbildungen werden in den abhängigen Ansprüchen beschrieben.

Das erfindungsgemäße Verfahren zur Optimierung der Übertragungseigenschaften eines Wellenlängen-Multiplex-Systems mit jeweils mehrere Pumpquellen aufweisenden kaskadierten Raman-Verstärkern zur Raman-Verstärkung eines mehrere Kanäle aufweisenden WDM-Signals weist am Übertragungstreckenende einen optimierten Qualitätsparameter für jeden Kanal des WDM-Signals auf. Der Qualitätsparameter eignet sich für die Ermittlung von Signalverzerrungen. Abhängig vom Spektrum des Qualitätsparameters werden unterschiedliche Raman-Gewinnprofile mindestens eines der Raman-Verstärker zum Ausgleich und zur Optimierung des Qualitätsparameters für alle Kanäle neu gewählt.

Als geeigneter Qualitätsparameter wird der Q-Faktor oder die Bitfehlerrate durch eine entsprechende Meßeinrichtung errechnet. Im Falle einer gesicherten Datenübertragung durch einen fehlerkorrigierenden Code wird die Bitfehlerrate z. B. durch die Anzahl der korrigierten Bits ermittelt.

Eine Preemphase der Kanäle des WDM-Signals am Anfang der Übertragungsstrecke zur Ersteinstellung des Qualitätsparameters und/oder der Signal-Rauschabstände ist nicht erforderlich. Aufgrund der ensprechenden kleinen Kanalpegel am Anfang der Übertragungsstrecke ergeben sich vorteilhaftweise nur geringe nichtlineare Signalverzerrungen. Eventuell kann eine Preemphase am Ende der Übertragungsstrecke zur Anpassung der kleinen Kanalpegel angeordnet werden, damit keine nichtlinearen Effekte bei hohen Pegeln auftreten.

Sollten auch die Kanäle am Anfang der Übertragungsstrecke zur Ersteinstellung des Qualitätsparameters und/oder der Signal-Rauschabstände eine Preemphase erfahren, wird die am Übertragungstreckenende angeordnete Meßeinrichtung hohe Signalverzerrungen bzw. Signal-Rauschabstände zwischen den Kanälen durch eine neue Regelung der Raman-Gewinnprofile kompensieren können.

Bei einem Übertragungssystem mit niedrigen nichtlinearen Signalverzerrungen kann eine zweite Meßeinrichtung zur Ermittlung der Signal-Rauschabstände jeweiliger Kanäle am Übertragungsstreckenende angeordnet werden und weiterhin durch eine zusätzliche Regelung jeweils unterschiedliche Raman-Gewinnprofile der Raman-Verstärker zum Ausgleich und zur Maximierung der Signal-Rauschabstände (OSNR) neu einstellen.

Durch geeignete Wahl und Regelung einzelner Pumpströme in den breitbandigen Raman-Verstärkern können unterschiedliche Raman-Gewinnprofile eingestellt werden und somit der Qualitätsparameter bzw. die Signal-Rauschabstände der Kanäle am Streckenende optimal angepasst werden.

Ein Ausführungsbeispiel der Erfindung wird anhand der Zeichnung näher beschrieben. Dabei zeigen:
- Figur 2:: den prinzipiellen Verlauf des erfindungsgemäßen Verfahrens für die Optimierung der Übertragungsqualität,
- Figur 3:: einige unterschiedlich einstellbare Raman-Gewinnporofile,
- Figur 4:: das Übertragungssytem nach dem erfindungsgemäßen Verfahren.

**Figur 2** zeigt den prinzipiellen Verlauf des erfindungsgemäßen Verfahrens für die Optimierung der Übertragungsqualität der Kanäle Kᵢ eines WDM-Signals S über eine Übertragungsstrecke, die ein Wellenlängen-Multiplex-System mit breitbandigen kaskadierten Raman-Verstärkern RV₁, RV₂, ..., RV_{N} aufweist. Am Ende der Übertragungsstrecke wird für jeden Kanal Kᵢ ein Qualitätsparameter Q oder BER - als Q-Faktor Q oder als Bitfehlerrate BER - zur Erzeugung eines Spektrums ermittelt. Weist das Spektrum des Qualitätsparameters Q oder BER eine besondere Signalverzerrung bzw. ungleichmäßige Signal-Rauschabstände zwischen den Kanälen Kᵢ auf, so werden unterschiedliche Raman-Gewinnprofile mindestens eines der Raman-Verstärker RV₁, RV₂, ..., RV_{N} zum Ausgleich und zur Optimierung des Qualitätsparameters Q oder BER neu gewählt und durch eine Regelung eingestellt. Diese Regelung für die entsprechenden Raman-Gewinnprofile der Raman-Verstärker RV₁, RV₂, ..., RV_{N} stellt die Pumpströme der Pumpquelle der Raman-Verstärker RV₁, RV₂, ..., RV_{N} so ein, daß alle Kanäle Kᵢ annähernd gleiche und optimierte Qualitätsparameter Q oder BER am Ende der Übertragungsstrecke aufweisen.

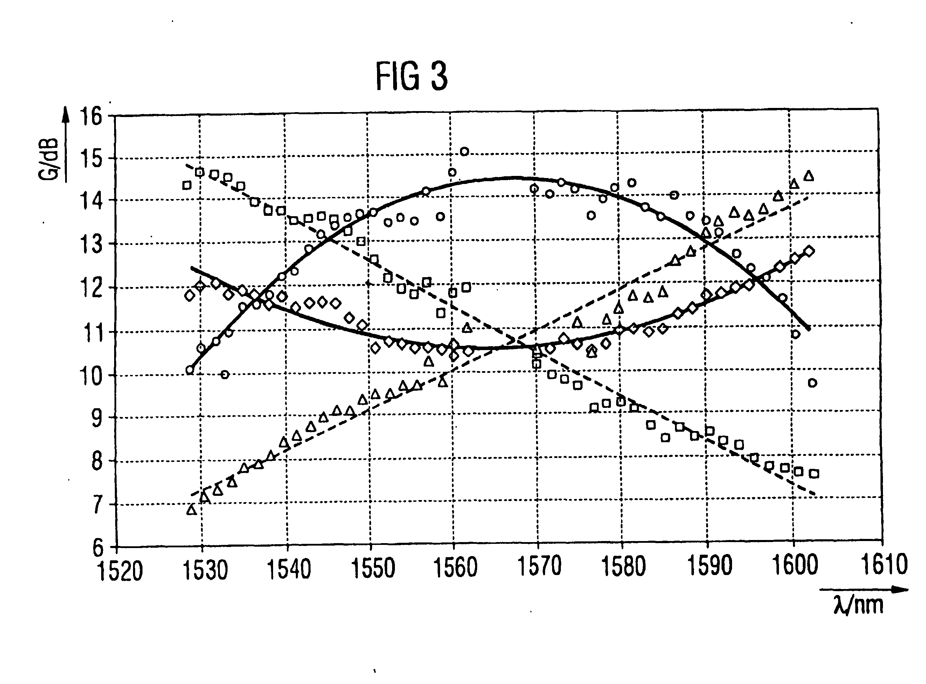

In **Figur 3** werden einige unterschiedlich einstellbare Raman-Gewinnprofile G als Funktion der Wellenlänge λ dargestellt, die zum Ausgleich und zur Optimierung des Qualitätsparameters Q oder BER neu gewählt werden können. Diese Neueinstellung erfolgt durch die entsprechende Regelung der Pumpströme der mehrere unterschiedliche Wellenlängen aufweisenden Pumpquelle mindestens eines der Raman-Verstärker RV₁, RV₂, ..., RV_{N}. Durch diese Neueinstellung werden einerseits aus z. B. nichtlinearen Effekten stammende Signalverzerrungen und andererseits von Kanalpegel- oder OSNR-Unterschieden verursachte Gewinn-Ungleichmäßigkeiten wie z. B. Verkippungen entlang der Ubertragungsstrecke kompensiert. Die Raman-Gewinnprofile sind im Vergleich zu üblichen Verstärkungsverfahren nicht unbedingt linear und/oder konstant, können aber je nach der Verteilung der Pumpströme der Pumpquelle ein angepaßtes variables Spektrum aufweisen.

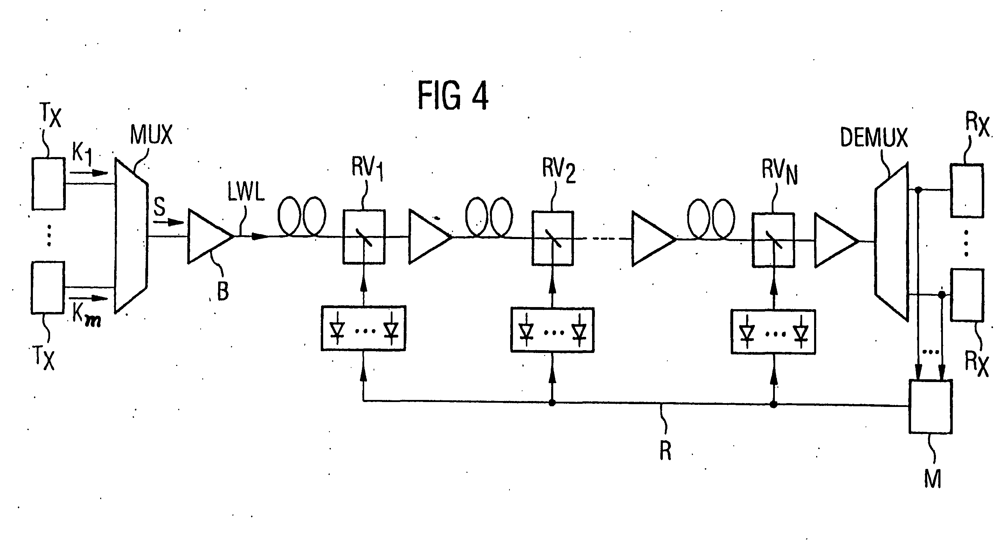

Figur 4 stellt ein Übertragungssytem nach dem erfindungsgemäßen Verfahren mit N kaskadierten Raman-Verstärkern RV₁, RV₂, ..., RV_{N} dar. Am Anfang der Übertragungsstrecke werden die aus m Sendern Tₓ ausgehenden Kanäle Kᵢ (0 < i < m) des WDM-Signals S mittels eines Multiplexers MUX in eine optische Faser LWL zusammengefaßt und weiterhin durch einen Booster B vorverstärkt, bevor sie durch N serielle Abschnitte mit jeweils einem Raman-Verstärker RVⱼ übertragen werden. Am Ende der Übertragungsstrecke erfahren die Kanäle Kᵢ eine Vorverstärkung und werden durch einen Demultiplexer DEMUX zu m entsprechenden Empfängern Rₓ geführt und aufgenommen. Eine Meßeinrichtung M ist den m Empfängern Rₓ nachgeschaltet und ermittelt den Qualitätsparameter Q oder BER für jeden Kanal Kᵢ. Ein Spektrum des Qualitätsparameters Q oder BER wird erstellt und daraus werden entsprechende Raman-Gewinnprofile den jeweiligen Raman-Verstärkern RV₁, RV₂, ..., RV_{N} zum Ausgleich und zur Optimierung des Qualitätsparameters Q oder BER zugeordnet. Eine Regelung R zur Einstellung der unterschiedlichen Raman-Gewinnprofile ist der Meßeinrichtung M und jeweils den Raman-Verstärkern RV₁, RV₂, ..., RV_{N} zugeschaltet, damit die entsprechenden Pumpströme der Pumpquelle der Raman-Verstärker RV₁, RV₂, ..., RV_{N} geregelt werden können.

Da keine Preemphase des WDM-Signals S am Anfang der Übertragungsstrecke erforderlich ist, bleiben die Signalverzerrungen begrenzt und lassen sich durch die Regelung der jeweiligen Raman-Gewinnprofile nach der Analyse des Spektrums des Qualitätsparameter Q oder BER einwandfrei kompensieren.

## Patentansprüche

1. Verfahren zur Optimierung der Übertragungseigenschaften eines
Wellenlängen-Multiplex-Systems mit kaskadierten Raman-Verstärkern (RV₁, RV₂, , ...RV_{N}), die jeweils mehrere Pumpquellen aufweisen, zur Verstärkung eines mehrere Kanäle (Kᵢ, i = 1 ... m) aufweisenden WDM-Signals (S), bei dem für jeden Kanal (Kᵢ) am Ende der Übertragungsstrecke ein als Q-Faktor oder Bitfehlerrate definierter Qualitätsparameter (Q, BER) ermittelt wird, und
bei dem die Raman-Gewinnprofile der Raman-Verstärker (RV₁, RV₂, ... RV_{N}) durch eine Neuregelung der Pumpströme der Pumpquellen einstellbar sind,
**dadurch gekennzeichnet,**
**daß** empfangsseitig am Ende der Übertragungsstrecke möglichst gleiche Werte der Qualitätsparameter (Q, BER) der Kanäle (kᵢ) des WDM-Signals durch eine zentrale Regeleinrichtung (R) eingestellt werden,
derart
**daß** am Ende der Übertragungsstrecke der Qualitätsparameter (Q, BER) pro Kanal (Kᵢ) gemessen wird,
**daß** diese Werte der zentralen Regeleinrichtung zugeführt werden, die entlang der Strecke die einzelnen Raman-Verstärker (RV₁, RV₂, ... RV_{N}) durch Einstellung der Raman-Gewinnprofile mittels der Pumpströme regelt.

2. Verfahren nach Anspruch 1, **dadurch gekennzeichnet,**
**daß** die Einstellung der Signal-Rauschabstände (ONSR) des WDM-Signals (S) durch die Einstellung der Raman-Gewinnprofile mit einer Preemphase kombiniert wird.

3. Verfahren nach Anspruch 1, **dadurch gekennzeichnet,**
**daß** ein Amplitudenhistogramm für jeden optischen Kanal (Kᵢ) ermittelt wird und daraus als Qualitätsparameter (Q, BER) der Q-Faktor (Q) errechnet wird,
oder
**daß** als Qualitätsparameter (Q, BER) die Bitfehlerrate (BER) für jeden Kanal (Kᵢ) ermittelt wird.

4. Verfahren nach Anspruch 1, **dadurch gekennzeichnet,**
**daß** im Falle einer gesicherten Datenübertragung mit einem fehlerkorrigierenden Code (FEC) die Bitfehlerrate (BER) durch eine Anzahl der korrigierten Bits ermittelt wird.

5. Optisches Übertragungssystem mit kaskadierten Raman-Verstärkern (RV₁, RV₂, , ... RV_{N}), die jeweils mehrere Pumpquellen aufweisen, zur Übertragung eines mehrere Kanäle (Kᵢ i > 0) aufweisenden Wellenlängen-Multiplex WDM-Signals (S),
mit einem möglichst optimierten als Q-Faktor oder Bitfehlerrate definierten Qualitätsparameter (Q, BER) am Übertragungsstreckenende,
bei dem am Übertragungssteckenende eine Meßeinrichtung (M) zur Ermittlung eines Qualitätsparameters (Q, BER) pro Kanal angeordnet ist,
**dadurch gekennzeichnet,**
**daß** eine der Meßeinrichtung (M) nachgeschaltete Regeleinrichtung (R) vorgesehen ist, durch die unterschiedliche Raman-Gewinnprofile der Raman-Verstärker (RV₁, RV₂, , ... RV_{N}) derart einstellbar sind, daß sich für alle Kanäle (Kᵢ) annähernd ein gleicher und optimierter Qualitätsparameter (Q, BER) ergibt.

6. Optisches Übertragungssystem nach Anspruch 5, **dadurch gekennzeichnet, daß** die Pumpströme der Pumpquellen jeweiliger Raman-Verstärker (RV₁, RV₂, , ... RV_{N}) zur Erzeugung der entsprechenden Raman-Gewinnprofile mittels der Regeleinrichtung (R) einstellbar sind.

7. Optisches Übertragungssystem nach einem der Ansprüche 5 oder 6, **dadurch gekennzeichnet,**
**daß** die Regeleinrichtung (R) so ausgebildet ist, daß die Pumpströme der Pumpquelle unterschiedlich für jeden einzelnen Raman-Verstärker einstellbar sind.

## Claims

1. Method for optimization of the transmission characteristics of a wavelength division multiplex system having cascaded Raman amplifiers (RV₁, RV₂, ..., RV_{N}), which each have a number of pump sources, for amplification of a WDM signal (S) which has a number of channels (Kᵢ, i=1...m), in which a quality parameter (Q, BER) which is defined as a Q factor or bit error rate is determined for each channel (Kᵢ) at the end of the transmission path, and
in which the Raman gain profiles of the Raman amplifiers (RV₁, RV₂, ..., RV_{N}) can be adjusted by readjustment of the pump currents of the pump sources,
**characterized**
**in that** values of the quality parameters (Q, BER) of the channels (Kᵢ) of the WDM signal which are as equal as possible are set at the reception end of the transmission path by means of a central control device (R)
in such a way
that the quality parameter (Q, BER) is measured per channel (Kᵢ) at the end of the transmission path,
**in that** these values are supplied to the central control device, which regulates the individual Raman amplifiers (RV₁, RV₂, ..., RV_{N}) along the path by using the pump currents to adjust the Raman gain profiles.

2. Method according to Claim 1, **characterized**
**in that** the setting of the signal-to-noise ratios (ONSR) of the WDM signal (S) is combined with preemphasis, by the setting of the Raman gain profiles.

3. Method according to Claim 1,
**characterized**
**in that** an amplitude histogram is determined for each optical channel (Kᵢ), and the Q-factor (Q) is calculated from this as the quality parameter (Q, BER),
or
**in that** the bit error rate (BER) is determined as the quality parameter (Q, BER) for each channel (Kᵢ).

4. Method according to Claim 1,
**characterized**
**in that**, in the case of secure data transmission with an error-correcting code (FEC), the bit error rate (BER) is determined by the number of corrected bits.

5. Optical transmission system having cascaded Raman amplifiers (RV₁, RV₂, ..., RV_{N}), which each have a number of pump sources, for transmission of a wavelength division multiplex WDM signal (S) which has a number of channels (Kᵢ, i>0), with a quality parameter (Q, BER) which is defined as a Q factor or bit error rate and is optimized as well as possible at the transmission path end,
in which a measurement device (M) for determining a quality parameter (Q, BER) per channel is arranged at the transmission path end,
**characterized in that** a control device (R) is provided, which is connected downstream from the measurement device (M) and by means of which different Raman gain profiles can be set for the Raman amplifiers (RV₁, RV₂, ..., RV_{N}) in such a manner that approximately the same optimized quality parameter (BER) results for all channels (Kᵢ).

6. Optical transmission system according to Claim 5,
**characterized**
**in that** the pump currents of the pump sources for each Raman amplifier (RV₁, RV₂, ..., RV_{N}) can be adjusted by means of the control device (R) in order to produce the appropriate Raman gain profiles.

7. Optical transmission system according to one of Claims 5 or 6,
**characterized**
**in that** the control device (R) is designed such that the pump currents of the pump source can be set differently for each individual Raman amplifier.

## Revendications

1. Procédé pour l'optimisation des caractéristiques de transmission d'un système à multiplexage en longueur d'onde comprenant des amplificateurs Raman en cascade (RV₁, RV₂, ..., RV_{N}) qui sont pourvus à chaque fois de plusieurs sources de pompe pour l'amplification d'un signal WDM (S) à plusieurs canaux (Kᵢ, i = 1 ... m), dans lequel un paramètre de qualité (Q, BER) défini en tant que facteur Q ou taux d'erreurs de bits est déterminé pour chaque canal (Kᵢ) à la fin du trajet de transmission et
dans lequel les profils de gain Raman des amplificateurs Raman (RV₁, RV₂, ..., RV_{N}) peuvent être réglés grâce à une nouvelle régulation des courants de pompe des sources de pompe,
**caractérisé en ce que**
sur le côté de réception, à la fin du trajet de transmission, des valeurs autant que possible identiques des paramètres de qualité (Q, BER) des canaux (Kᵢ) du signal WDM sont réglées grâce à un dispositif de régulation central (R), de manière à ce que le paramètre de qualité (Q, BER) soit mesuré pour chaque canal (Kᵢ) à la fin du trajet de transmission,
à ce que ces valeurs soient amenées au dispositif de régulation central qui régule les amplificateurs Raman individuels (RV₁, RV₂, ..., RV_{N}) le long du trajet en réglant les profils de gain Raman au moyen des courants de pompe.

2. Procédé selon la revendication 1, **caractérisé en ce que** le réglage des rapports signal/bruit (ONSR) du signal WDM (S) grâce au réglage des profils de gain Raman est combiné à une pré-emphase.

3. Procédé selon la revendication 1, **caractérisé en ce que** l'on détermine un histogramme d'amplitudes pour chaque canal optique (Kᵢ), à partir duquel le facteur Q (Q) est calculé en tant que paramètre de qualité (Q, BER) ou **en ce que** l'on détermine, en tant que paramètre de qualité (Q, BER), le taux d'erreurs de bits (BER) pour chaque canal (Kᵢ).

4. Procédé selon la revendication 1, **caractérisé en ce que**, dans le cas d'une transmission de données sécurisée par un code correcteur d'erreurs (FEC), le taux d'erreurs de bits (BER) est déterminé grâce à un nombre de bits corrigés.

5. Système de transmission optique comprenant des amplificateurs Raman en cascade (RV₁, RV₂, ..., RV_{N}) pourvus à chaque fois de plusieurs sources de pompe pour la transmission d'un signal WDM (S) en multiplexage en longueur d'onde à plusieurs canaux (Kᵢ, i > 0), avec un paramètre de qualité (Q, BER) défini en tant que facteur Q ou taux d'erreurs de bits et autant que possible optimisé à la fin du trajet de transmission,
dans lequel un dispositif de mesure (M) pour la détermination d'un paramètre de qualité (Q, BER) pour chaque canal est situé à la fin du trajet de transmission,
**caractérisé**
**en ce qu'**un dispositif de régulation (R) monté derrière le dispositif de mesure (M) est prévu, grâce auquel on peut régler différents profils de gain Raman des amplificateurs Raman (RV₁, RV₂, ..., RV_{N}) de manière à obtenir pour tous les canaux (Kᵢ) un paramètre de qualité (Q, BER) optimisé à peu près identique.

6. Système de transmission optique selon la revendication 5, **caractérisé en ce que** les courants de pompe des sources de pompe des amplificateurs Raman respectifs (RV₁, RV₂, ..., RV_{N}) peuvent être réglés au moyen du dispositif de régulation (R) pour produire les profils de gain Raman correspondants.

7. Système de transmission optique selon l'une des revendications 5 ou 6, **caractérisé en ce que** le dispositif de régulation (R) est exécuté de manière à ce que les courants de pompe de la source de pompe puissent faire l'objet d'un réglage différent pour chaque amplificateur Raman individuel.
